# EUROPÄISCHE PATENTSCHRIFT

(11) **EP 0 429 610 B1**
(45) Veröffentlichungstag und Bekanntmachung des Hinweises auf die Patenterteilung: **08.09.1993**
(21) Anmeldenummer: 90909042.5
(22) Anmeldetag: 19.06.1990
(51) Int. Cl.: B60P 7/08

(54) **SPANNRATSCHE FÜR EINEN ZURRGURT**
TENSIONING RATCHET FOR A CLAMPING STRAP
DISPOSITIF TENDEUR A CLIQUETS POUR SANGLE D'AMARRAGE

(30) Priorität: 19.06.1989 DE 8907460 U
(43) Veröffentlichungstag der Anmeldung: 05.06.1991
(73) Patentinhaber: SPANSET INTER AG, CH-8618 Oetwil am See (CH)
(72) Erfinder: KÄMPER, Hans-Werner, D-5102 Würselen (DE)
(74) Vertreter: Tergau, Enno, Dipl.-Ing.
(86) Internationale Anmeldenummer: DE9000459
(87) Internationale Veröffentlichungsnummer: WO9015731

(56) Entgegenhaltungen:
- DE-A- 2 845 227
- FR-A- 2 236 774
- US-A- 4 860 606

## Beschreibung

Die Erfindung betrifft eine Spannratsche für einen Zurrgurt mit den im Oberbegriff des Anspruches 1 genannten Merkmalen. Eine derartige Spannratsche ist beispielsweise aus DE-A- 28 45 227 bekannt.

Derartige Spannratschen dienen als Spann- und Zurrvorrichtungen für Zurrgurte, wobei Zurrgurte eine bevorzugte Ausführungsform von Spann- und Zurrmitteln darstellen, die genauso als Kette, Stahltrosse, Seil o.ä. ausgeführt sein können. Mit derartigen Zurrgurten werden Transportgüter mit der zur Lagesicherung auf Transporthilfsmitteln oder Transportmitteln, beispielsweise Ladeflächen von LKW, notwendigen Zurrspannung beaufschlagt.

Eine Spannratsche der eingangs genannten Art weist hierzu üblicherweise ein als Grundkörper dienendes Rahmengehäuse auf, welches mit der Ladefläche fest verbunden sein kann. Meistens ist das Rahmengehäuse jedoch derart als Gurthaltearm ausgebildet, daß der Zurrgurt mit seinem Festende an einem Freiende des Rahmengehäuses, beispielsweise mit einem Haltebolzen, fixiert ist, während gleichzeitig am gegenüberliegenden Freiende des Rahmengehäuses eine mit einem Richtgesperre gekoppelte Welle vorhanden ist. Derartige Richtgesperre sind allgemein bekannt (s. Brockhaus Enzyklopädie, 17. Auflage, 17. Band, S. 714, FA Brockhaus Wiesbaden 1973).

Aus der FR-A-22 36 774 ist eine weitere Spannwinde bekannt. Diese Spannwinde weist eine Aufwickelwelle zum Aufwickeln eines Zurrstrangs auf. In der röhrenartigen Aufwickelwelle ist ein Federkraftantrieb angeordnet, dessen Antriebsfeder bei vollständig aufgewickeltem Zurrstrang entspannt ist und durch das Abwickeln des Zurrstrangs durch die damit verbundene Drehung der Aufwickelwelle vorspannbar ist. Um eine Rückdrehung der Spannwinde beim Abwickeln des Zurrstrangs zu verhindern, ist an der Spannwinde ein hinsichtlich seiner Sperrichtung umschaltbares Gesperre vorhanden. In seiner einen Sperrstellung verhindert das Gesperre die Rückdrehung der Aufwickelwelle durch den Federkraftantrieb. Ist das zu verzurrende Gut angebracht, wird das Gesperre gelöst, wodurch der Federkraftantrieb die Aufwickelwelle rückdreht und ein Aufwickeln des Zurrstrangs auf die Aufwickelwelle bewirkt wird. Ist der Zurrstrang in seine Sollstellung aufgewickelt, wird das Gesperre in seiner zweiten Sperrstellung gesperrt, um ein umgewolltes Abwickeln des Zurrstrangs von der Aufwickelwelle zu verhindern.

Nach der Umschlingung der zu sichernden Last wird das Losende des Zurrgurtes durch einen üblicherweise die Aufwickelwelle über deren gesamte Länge diametral durchsetzenden Schlitz soweit hindurchgezogen, wie dies widerstandslos möglich ist. Sodann wird die Aufwickelwelle durch Hin- und Herschwenken eines ein außenverzahntes Sperrad des Gesperres in die Spannrichtung der Aufwickelwelle antreibenden Spannhebels derart gedreht, daß der Zurrgurt um die nach Art einer Aufwickeltrommel wirksame Aufwickelwelle gewickelt wird und dadurch mit einer steigenden Zurrspannung beaufschlagt wird.

Die Konstruktion herkömmlicher Spannratschen ist so getroffen, daß im Ruhezustand bzw. im endgültigen Lastsicherungszustand der Spannhebel eine Parallellage zum Rahmengehäuse einnimmt. Zum Spannen des Zurrgurtes, also zur Aufbringung des erforderlichen, auf die Aufwickelwelle zu übertragenden Drehmoments wird der Spannhebel vom Rahmengehäuse weggeschwenkt, bis das Rahmengehäuse und der Spannhebel etwa einen 90°-Winkel bilden, dessen Scheitel etwa in der Mittelachse der Aufwickelwelle liegt. Das Spannen des Zurrgurtes erfolgt wie oben beschrieben durch eine Hin- und Herbewegung des Spannhebels zwischen der Ruhe- und der 90°-Position. Die Zähne des Sperrades sind hierzu derart mit zueinander asymmetrischen Flanken versehen und gerichtet, daß ein am Schwenkarm verschiebbarer Mitnehmer in einer Schwenkrichtung des Schwenkarmes sperrend in die Verzahnung eingreift und durch das Schwenken das Sperrad zusammen mit der daran kinematisch gekoppelten Aufwickelwelle in Spannrichtung dreht (Lasthub), während der Mitnehmer in entgegengesetzter Schwenkrichtung über die meist ausgerundeten Rückflanken der Zähne hinweggleitet (Leerhub). Die Hin- und Herbewegung des Schwenkhebels besteht folglich stets aus einem Last- und einem Leerhub. Erfolgt der Lasthub durch eine Schwenkbewegung des Spannhebels aus der 90°-Position hin zum Rahmengehäuse in die Ruheposition durch Zug, spricht man von einer Zugratsche. Erfolgt der Lasthub dagegen durch eine Bewegung des Spannhebels aus der Ruheposition in die 90°-Position weg vom Rahmengehäuse durch Druck, spricht man von einer Druckratsche.

Der Hauptnachteil, derartige Zug- und Druckratschen in nur eine Richtung spannen zu können, ist evident. Bei fest montierten Spannratschen ist zudem nachteilig, daß diese ergonomisch günstig für Rechtshänder, nicht jedoch für Linkshänder montiert sein können.

Beim Gebrauch derartiger Spannratschen hat es sich als nützlich erwiesen, daß sich der Bediener an den Spannhebel der Ratsche hängt, um durch die resultierende Gewichtskraft seines Körpergewichts das notwendige Drehmoment über den Spannhebel auf die Spannratsche zu übertragen. Die Einseitigkeit der Drehrichtung der Spannratsche kann je nach der momentanen Position des Bedieners zur Ratsche folglich nachteilig sein.

Nachteilig ist weiterhin, sich von vornherein bereits bei der Erstbeschaffung einer Ratsche auf eine bestimmte Spannrichtung festlegen zu müssen. Außerdem muß beim Umschlingen der zu sichernden Last stets bedacht werden, welche Endposition die Ratsche schließlich einnehmen wird.

Aufgabe der Erfindung ist es daher, eine Spannratsche derart auszugestalten, daß das zur Spannung des Zurrgurtes notwendige, durch Schwenken des Spannhebels zu erzeugende und auf die Aufwickelwelle zu übertragende Antriebsdrehmoment arbeitsphysiologisch einfach aufbringbar ist.

Diese Aufgabe wird durch die Merkmale des kennzeichnenden Teils des Anspruches 1 gelöst.

Die Erfindung geht davon aus, daß für die Erzeugung des Antriebsdrehmoments grundsätzlich gleichgültig und der Auswahl durch die Bedienungsperson überlassen ist, in welche der beiden möglichen Drehrichtungen die Aufwickelwelle gedreht, also der Zurrgurt aufgewickelt wird. Wichtig dagegen ist die Wahlfreiheit abhängig von der jeweiligen Momentanposition des Bedieners gegenüber der Spannratsche, ob das aufzubringende Drehmoment durch einen Lasthub nach Art einer Zugratsche oder einer Druckratsche erzeugt wird. Vorrangig ist die für die Bedienungsperson arbeitsphysiologisch bessere Spannrichtung des Spannhebels. Vorteilhafterweise kann sich die Bedienungsperson die jeweils gewünschte Sperrichtung durch eine Umschaltung der Sperrichtung des Gesperres aussuchen.

Die erfindungsmäßige Spannratsche verfügt daher über ein hinsichtlich seiner Sperrichtung umschaltbares Sicherungsrichtgesperre sowie über ein in seiner Sperrichtung ebenfalls umschaltbares Spannrichtgesperre. Die Ausführung des Sicherungsrichtgesperres nach Anspruch 2 ist mit geringem baulichem Mehraufwand realisierbar.

Bei einer Ausführungsform des Sicherungsrichtgesperres nach den Ansprüchen 3 und 4 wirken zwei voneinander unabhängige, als einarmige Hebel ausgestaltete Sperrer auf das außenverzahnte Sperrad. Dabei ist immer nur einer der beiden Sperrer mit der Verzahnung in Eingriff, während der jeweils andere Sperrer in einer Inaktivstellung verharrt. Hierdurch ist die Umschaltbarkeit der Sperrichtung des Sicherungsgesperres realisiert. Besonders vorteilhaft ist die Zusammenfassung beider Sperrhebel zu einem einzigen Sperrelement. Es ist dies ein zweiarmiger, zwischen beiden Sperrstellungen schwenkbaren Doppelsperrer gemäß Anspruch 5.

Die Ausführung des Sicherungsrichtgesperres nach den Ansprüchen 6 bis 8 erlaubt eine einfache und bedienungskomfortable Umschaltung des Doppelsperrers über einen in einer V-förmigen Schieberführungsnut geführten Andruckschieber.

Die Ausführungsform des Sicherungsrichtesperres nach den Ansprüchen 9 bis 11 gewährleistet ein vorteilhaftes Zusammenwirken des Doppelsperrers mit dem Andrückschieber einerseits und mit dem zum Gesperre gehörenden Sperrad andererseits.

In seiner Ausführungsform gemäß Anspruch 12 ist das Spannrichtgesperre ebenfalls manuell umschaltbar.

Die Ausführung des Spannrichtgesperres gemäß den Ansprüchen 13 und 14 gewährleistet dessen einfache Funktion, insbesondere dessen Umschaltbarkeit. Besonders vorteilhaft ist die Ausgestaltung des Mitnehmers als Doppelmitnehmer gemäß Anspruch 15. Die Ausführung des Spannrichtgesperres nach den Ansprüchen 16 bis 22 bietet eine einfache und bedienungsfreundliche Umschaltung der Spannrichtung des Spannrichtgesperres.

Durch die Ausführung nach den Ansprüchen 23 und 24 kann das Spannrichtgesperre über einen einfachen Handgriff umgeschaltet bzw. entriegelt werden.

Die Ausführung der Spannratsche nach den Ansprüchen 25 bis 27 gewährleistet eine bediengungskomfortables Öffnen der Spannratsche zum Lösen des Zurrgurtes.

Eine Ausführung der Spannratsche nach Anspruch 28 betrifft eine vorteilhafte Synchronisierung der Umschaltung bzw. der jeweils wirksamen Sperrichtung des Sicherungsrichtgesperres und des Spannrichtgesperres.

Eine Ausführung nach den Ansprüchen 29 und 30 betrifft einen fertigungstechnisch vorteilhaften, symmetrischen Aufbau der Gesamtkonstruktion mit jeweils beidseitig wirkenden Spannrichtgesperre und einem Sicherungsrichtgesperre zur Übertragung besonders hoher Spannmomente bei gleichzeitig möglichst flachbauendem Aufbau der Gesamtkonstruktion.

Die Erfindung wird mit weiteren erfindungswesentlichen Merkmalen anhand des in den Zeichnungen dargestellten Ausführungsbeispiels im Detail beschrieben.

Es zeigen:

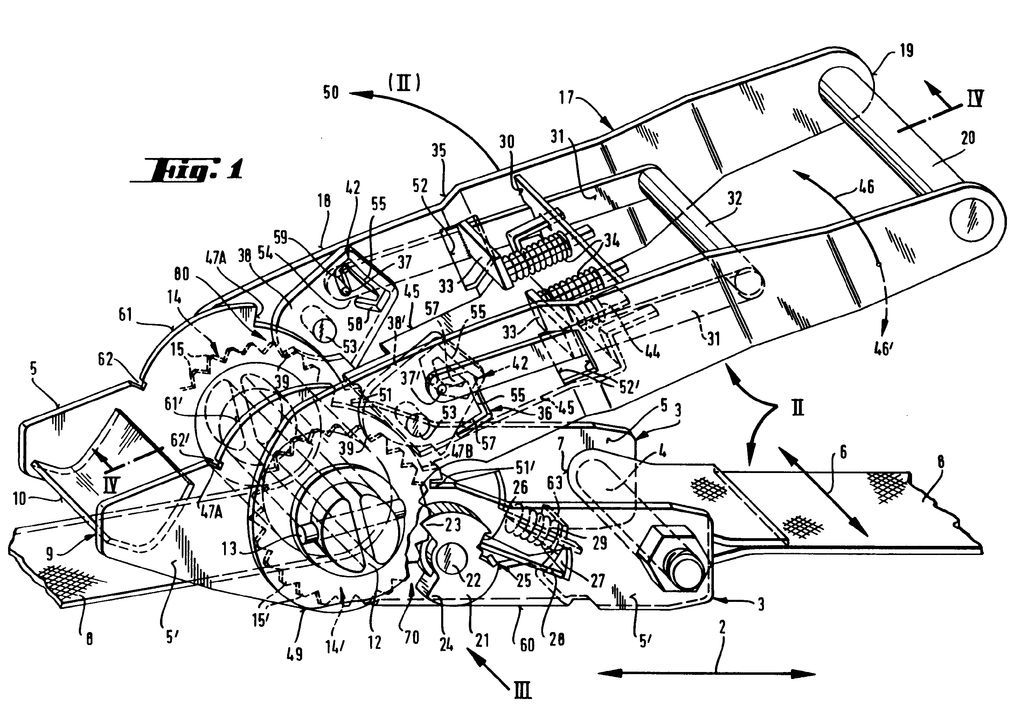

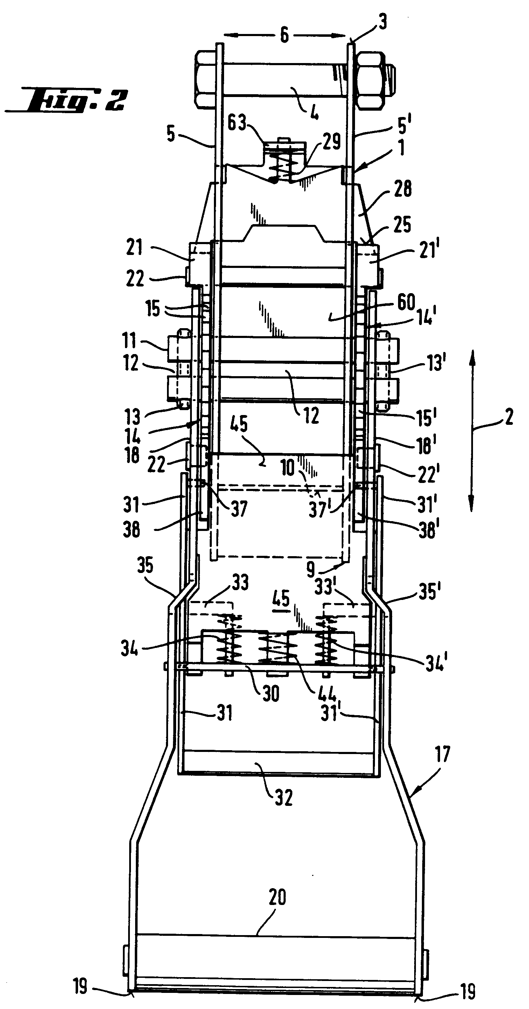

- Fig. 1: Eine Perspektivdarstellung der Spannratsche, in der Figurenbeschreibung kurz " Ratsche" genannt, in Mittelposition, gesehen aus einer Seite von vorne und von oben,

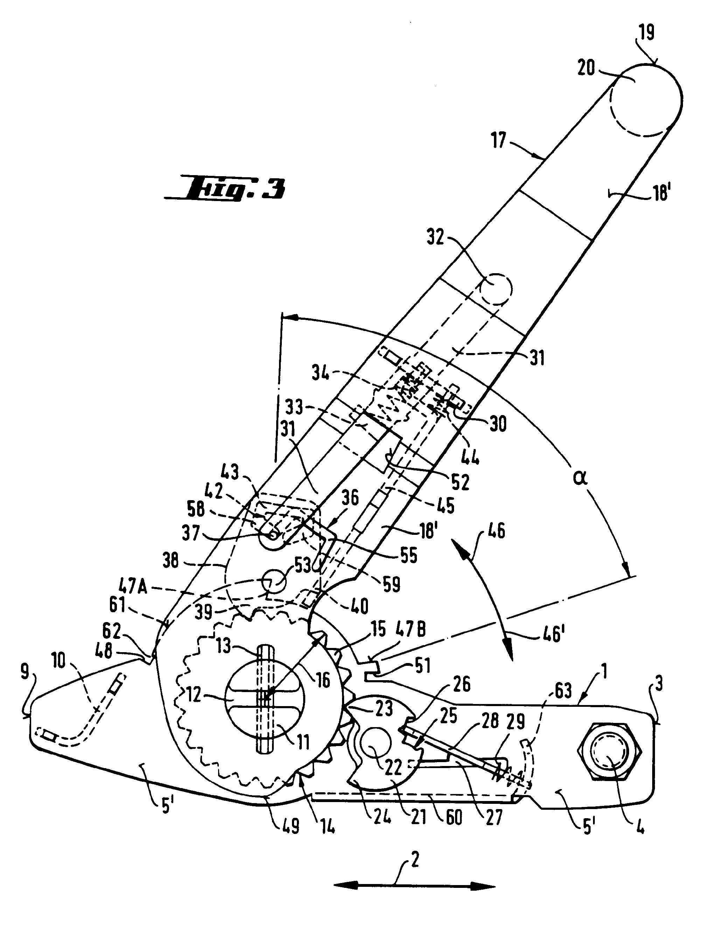

- Fig. 2: eine Draufsicht auf die Spannratsche etwa in Pfeilrichtung II in Fig. 1 mit maximal in Richtung II der Fig. 1 auseinander geklapptem Spannhebel und Rahmengehäuse von oben gesehen (II),

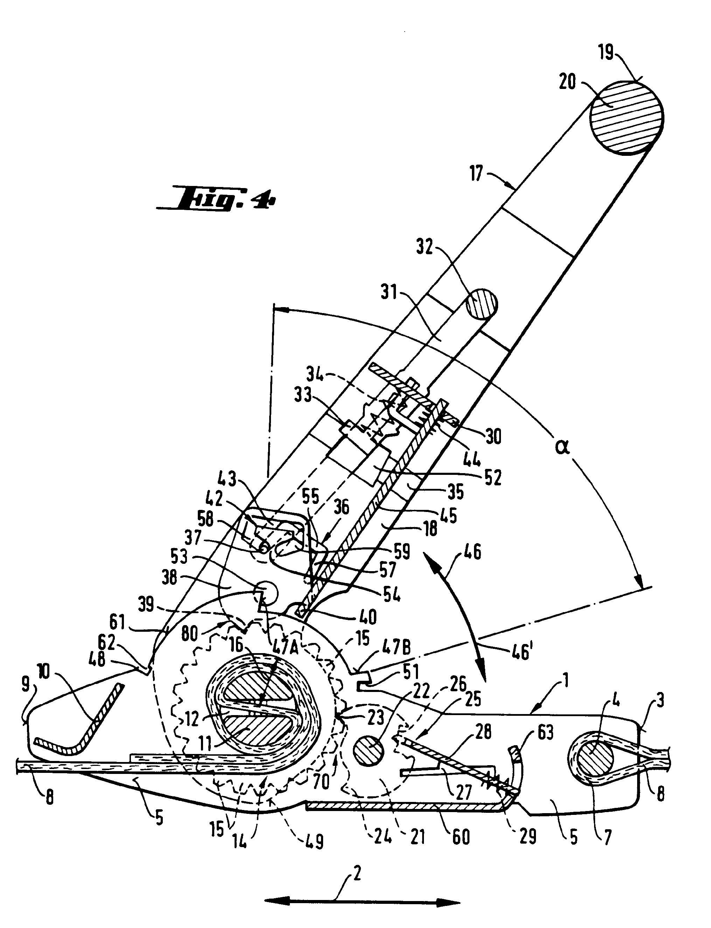

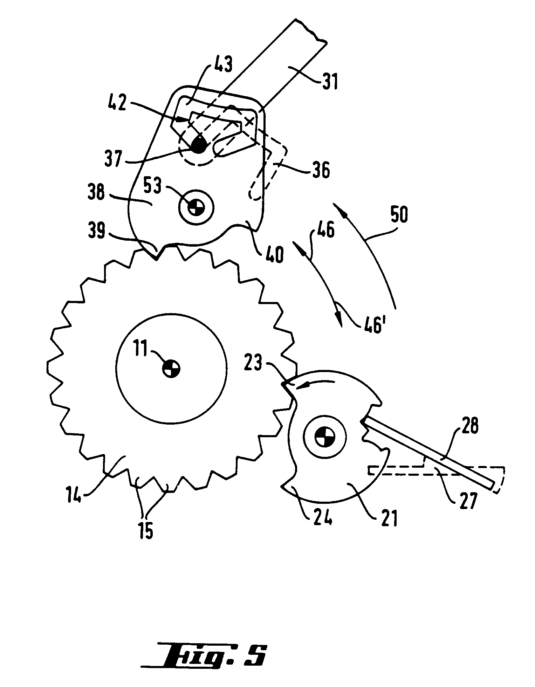

- Fig. 3: eine Seitenansicht entsprechend Pfeil III in Fig. 1, wieder in einer Mittelschwenkstellung zwischen der Ruheposition und der 90°-Position,

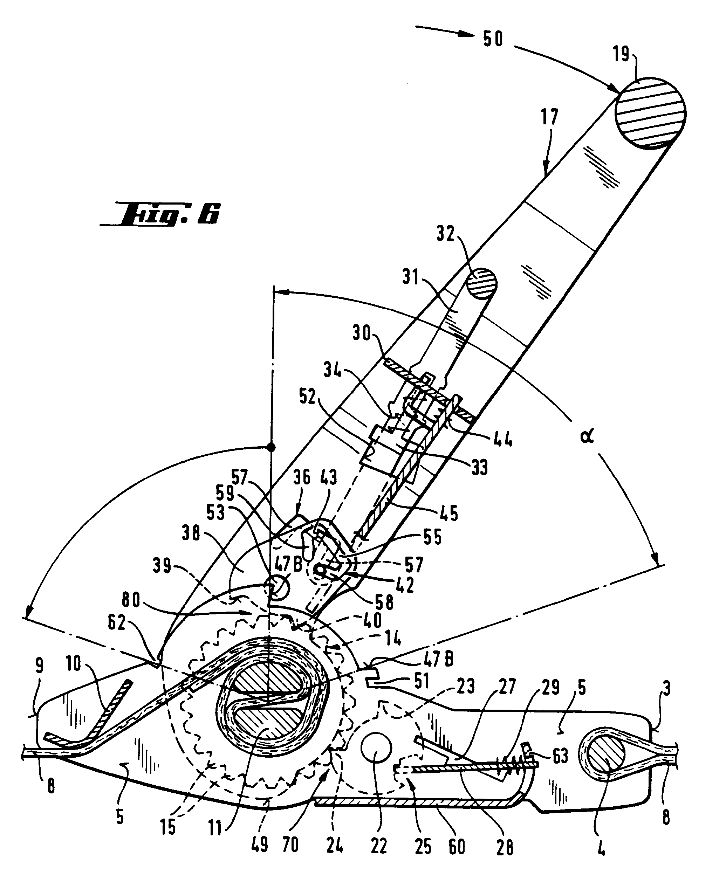

- Fig. 4: einen Schnitt in der durch die Schnittlinie IV-IV in Fig. 1 gekennzeichneten Schnittebene gleicher Mittelschwenkstellung wie in Fig. 3,
- Fig. 5: die schematische Prinzipdarstellung entsprechend der Einstellung nach Fig.3 und Fig.4 des Sicherungsrichtgesperres und des Spannrichtgesperres mit vom Rahmengehäuse weggewandter Spannrichtung in Schwenkrichtung des Spannhebels,
- Fig. 6: einen Schnitt entsprechend der Fig. 3, wobei jedoch die Gesperre mit hin zum Rahmengehäuse gewandter Spannrichtung eingestellt sind,
- Fig. 7: die schematische Prinzipdarstellung des Sicherungsrichtgesperres und des Spannrichtgesperres mit hin zum Rahmengehäuse gewandter Spannrichtung des Spannhebels gemäß Fig. 6,
- Fig 8: die schematische Prinzipdarstellung des Sicherungsrichtgesperres und des Spannrichtgesperres in Freilaufstellung,

Das Rahmengehäuse 1 weist in Längsrichtung 2 gesehen einen im wesentlichen U-förmigen Querschnitt mit beidseitig angeformt gabelartigen Freienden 3,9 auf. Am Rückfreiende 3 verbindet ein Befestigungsbolzen 4 die Seitenwände 5, 5' des Rahmengehäuses 1 quer (= Querrichtung 6) zur Längsrichtung 2. Der Befestigungsbolzen 4 dient zur Befestigung des Festendes 7 des Zurrgurtes 8, welches dazu schlaufenförmig um den Befestigungsbolzen 4 herumgeführt ist.

Das dem Rückfreiende 3 in Längsrichtung 2 abgewandte Vorderfreiende 9 weist ein die Seitenwände 5, 5' zur Stabilisierung des Rahmengehäuses 1 durchsetzendes und nach Art einer Querstrebe versteifendes Querverbindungsblech 10 auf. Etwa in der Mitte zwischen Vorder- 9 und Rückfreiende 3 ist im Teil ist ein die Seitenwände 5, 5' verbindendes Querverbindungsblech 60 angeordnet. Das Querverbindungsblech 60 ist als mit den Seitenwänden 5, 5' einstückiges Stanzbiegeteil ausgeführt. In Längsrichtung 2 neben dem Querverbindungsblech 10 ist die Aufwickelwelle 11 zwischen Seitenwänden 5, 5' drehbar gelagert. Die Aufwickelwelle 11 ist über ihre gesamte Länge (Querrichtung 6) von einem Gurtaufnahmeschlitz 12 diametral durchsetzt. Die Schlitzlänge entspricht der Gurtbreite. Die Aufwickelwelle 11 durchsetzt und ragt in Querrichtung 6 über die Seitenwände 5, 5' des Rahmengehäuses 1 hinaus. Die über die Seitenwände 5, 5' hinausstehenden Bereiche der Aufwickelwelle 11 sind von die Axiallage sichernden Lagerstiften 13 diametral durchsetzt. Die Aufwickelwelle 11 durchsetzt weiterhin mit Formschlußverbindung die beiden Sperräder 14, 14' zentrisch und bildet damit deren Drehachse gegenüber dem Rahmengehäuse 1. Die Sperräder 14, 14' tragen auf ihrem Durchmesser radial nach außen stehende Sperradzähne 15. Die Sperradzähne 15 weisen einen sich in Querrichtung 6 erstreckenden symmetrischen, trapezförmigen Querschnitt auf. Dadurch stehen sie nach Art der Zähne eines Stirn - Zahnrades in Radialrichtung 16 aus dem Umfang der Sperräder 14, 14' hervor.

Die Aufwickelwelle 11 durchsetzt außerdem die Gabelenden des Spannhebels 17 nach Art ebenfalls einer Lagerachse. In Querrichtung 6 liegt jeweils ein Sperrad 14, 14' zwischen den Außenseiten der Seitenwände 5, 5' des Rahmengehäuses 1 und den Innenseiten der Spannhebelseitenwände 18, 18' ein. Die Lagerstifte 13 liegen beiderseitig von außen an den Außenseiten der Spannhebelseitenwände 18, 18' an und sichern dadurch formschlüssig die Axiallage der Aufwickelwelle 10 gegenüber Rahmengehäuse 1 und Spannhebel 17.

Das dem von der Aufwickelwelle 11 durchsetzten Freiende abgewandte Griffende 19 des Spannhebels 17 ist als Betätigungsgriff 20 ausgeführt, der als zylindrischer Körper die Spannhebelseitenwände 18, 18' nach Art einer Querstrebe miteinander verbindet.

Am Rahmengehäuse 1 ist in Längsrichtung 2 zwischen der Aufwickelwelle 11 und dem Befestigungsbolzen 4 auf der Außenseite einer jeden Seitenwand 5, 5' ein Doppelsperrer 21, 21' montiert. Beide Doppelsperrer 21, 21' sind von einer Sperrerachse 22 durchsetzt und um diese schwenkbar am Rahmengehäuse 1 gelagert. Ausgehend von der Sperrachse 22 stehen in Richtung auf das Sperrad 14, 14' nach Art etwa zweier auseinandergestreckter Arme jeweils ein oberer Sperrarm 23 und ein unterer Sperrarm 24 zahnartig aus dem Doppelsperrer 21, 21' hervor. Die Sperräder 14, 14' und die Doppelsperrer 21, 21' bilden das in den Ansprüchen genannte Sicherungsrichtgesperre 70. In die dem Sperrad 14, 14' abgewandte Rückseite 25 beider Doppelsperrer 21, 21' ist eine im wesentlichen V-förmige Schaltausnehmung 26 eingeformt. An die Rückseite 25 des Doppelsperrers 21, 21' schließt sich in Längsrichtung 2 eine jeweils in die Seitenwand 5, 5' des Rahmengehäuses eingeformte, im wesentlichen V-förmige Schieberführungsnut 27 an. In Querrichtung 6 durchsetzt ein Andruckschieber 28 die Seitenwände 5, 5', deren Durchtrittsöffnungen als Schieberführungsnuten 27 ausgebildet sind. Der Andruckschieber 28 ist gegen seine Ausrückrichtung radial nach außen am Rahmengehäuse 1 über eine am Querverbindungsblech 60 angeformte und winkelförmig von diesem abstehende Lasche 63 an einem als Druckfeder wirkenden Federelement 29 abgestützt.

Die Funktionsweise des Doppelsperrers 21, 21' bzw. des Sicherungsrichtgesperres 70 ist wie folgt: Der Andruckschieber 28 wird wahlweise in einen der beiden V-Schenkel der Schieberführungsnut 27 eingeschwenkt und drückt unter der Belastung des Federelements 29 permanent gegen einen der beiden Seiten - Schenkel der Schaltausnehmung 26. Durch den Druck auf einen der Seiten - Schenkel der Schaltausnehmung 26 wird entweder der obere Sperrarm 23 oder der untere Sperrarm 24 des Doppelsperrers 21, 21' in die Verzahnung (= Zähne 15, 15') des Sperrades 14 geschwenkt.

Etwa in der Mitte zwischen dem Betätigungsgriff 20 und der Aufwickelwelle 11 sind die Spannhebelseitenwände 18, 18' durch ein Querjoch 30 fest miteinander verbunden. Das Querjoch 30 wird in Längsrichtung 2 nach außen von parallel zu den Spannhebelseitenwänden 18, 18' verlaufenden Freienden zweier Steuerschieber 31, 31' durchsetzt, die durch einen in Querrichtung 6 verlaufenden, bügelartigen Handgriff 32 miteinander verbunden sind. Die Steuerschieber 31, 31' weisen in Querrichtung 6 nach innen in den Zwischenraum zwischen den Spannhebelseitenwänden 18, 18' vorstehende, einander zugewandte Fixiervorsprünge 33, 33' auf, mit deren Hilfe die Steuerschieber 31, 31' über die Federpakete 34, 34' am Querjoch 30 in Richtung auf die Aufwickelwelle 11 beaufschlagt sind.

Die Steuerschieber 31, 31' verlaufen geradlinig an ihrem dem Betätigungsgriff 20 zugewandten Ende zunächst innen parallel zu den Innenseiten der Spannhebelseitenwände 18, 18'. Diese sind im Bereich einer Verjüngungsstelle 35, 35' nach innen gekröpft. Dort sind sie von den Steuerschiebern 31, 31' im Bereich von ein großes Bewegungsspiel ermöglichenden Öffnungen 52 durchsetzt. Die Steuerschieber 31,31' erstrecken sich in ihrem weiteren Verlauf in Längsrichtung 2 zur Aufwickelwelle 11 hin außenliegend parallel zu den Außenseiten der Spannhebelseitenwände 18, 18'. An die dem Steuerhandgriff 32 abgewandten, zur Aufwickelwelle 11 orientierten Freienden sind parallel zur Aufwickelwelle 11 nach innen vorstehend Steuerbolzen 37, 37' angeformt. Die Steuerbolzen 37, 37' durchsetzen mit ihren Vorstehenden jeweils eine in die Spannhebelseitenwände 18, 18' eingeformte, U-förmige Steuernut 36 und stehen endseitig über die Spannhebelseitenwände 18,18' nach innen hinaus. Die beiden U-Schenkel 57 der Steuernut 36 sind dabei in Richtung etwa auf die Aufwickelwelle 11 zum wellenseitigen Ende des Spannhebels 17 orientiert. Im Bereich der U-förmigen Steuernuten 36 sind die Innenseiten der Spannhebelseitenwände 18, 18' flankierende Doppelmitnehmer 38, 38' um parallel zur Aufwickelwelle 11 gerichtete Achsen 53 schwenkbar an den Innenseiten gelagert. Die Schwenkstellung der Doppelmitnehmer 38, 38' wird durch die Lage der Steuerbolzen 37, 37' innerhalb der U-förmigen Steuernut 36 bestimmt. Die Lage der Steuerbolzen 37,37' ihrerseits innerhalb der Steuernut 36 wird durch die Steuerschieber 31, 31', also letzlich seitens des Steuerhandgriffs 32 bestimmt. Die Sperräder 14, 14' bilden zusammen mit den Doppelmitnehmern 38, 38' das in den Ansprüchen genannte Spannrichtgesperre 80

In ihrer Wirkung auf das Sperrad 14, 14' ähnlich den Doppelsperrern 21, 21' weisen die Doppelmitnehmer 38, 38' an ihrer dem Sperrad 14, 14' zugewandten Seite nach Art von gegenüber den Achsen 53 radial auseinanderstehenden Armen jeweils einen oberen Mitnehmerarm 39 und einen unteren Mitnehmerarm 40 auf, die in Richtung auf das Sperrad 14, 14' vorstehen. An der den Mitnehmerarmen 39, 40 abgewandten Mitnehmerrückseite 41 ist jeweils eine im wesentlichen V-förmige Steuerausnehmung 42 eingeformt. Die auseinanderliegenden V-Schenkelenden 58, 59 der Steuerausnehmung 42 sind durch eine Verbindungsnut 43 miteinander verbunden.

Die Funktionsweise des Doppelmitnehmers 38, 38' zur Spannrichtungsumkehr ist folgende:
Durch ein Verfahren des Steuerschiebers 31, 31' mittels einer Ziehbewegung am Handgriff 32 in Richtung auf den Betätigungsgriff 20 wird der Steuerbolzen 37 in der Steuernut 36 zwangsgeführt in seine jeweilige steuernde Sollposition im Schenkelende 58 oder 59 gegenüber dem Doppelmitnehmer 38 positioniert. Dasselbe gilt zwangsläufig auch für den andernen Steuerbolzen 37' gegenüber dem anderen Doppelmitnehmer 38'. Die auf den Doppelmitnehmer 38, 38' einwirkende Steuerfunktion wird somit von den Steuerbolzen 37, 37' über die V-förmige Steuerausnehmung 42 bzw. über deren Querschenkel 55 in eine Soll-Drehstellung des Doppelmitnehmers 38,38' gegenüber dem Sperrad 14, 14' umgewandelt. Durch die beiden Schenkel 58, 59 ihrer V-Form wird ein Zwickel 54 gebildet, welcher ähnlich einer Pfeilspitze der Peripherie des Sperrades 14, 14' zugewandt ist.

Durch seitlichen Druck auf die vorderen Enden der Steuerschieber 31, 31' werden deren Steuerbolzen 37 im Querschenkel 55 der Steuernut 36 in Richtung auf deren anderen U-Schenkel 58 oder 59 verfahren. Damit verfährt zwangsläufig der Steuerbolzen 37,37' auch innnerhalb der Verbindungsnut 43 des Doppelmitnehmers 38, 38' in den bisher inaktiven V-Schenkel der Steuerausnehmung 42 hinein bis zu dessen innerem Ende im Bereich des Zwickels 54. Dieser Bewegungsablauf vollzieht sich infolge Loslassens des Handgriffs 32 angetrieben vom permanenten Druck der Federpaket 34, 34'. Dadurch nämlich gleitet der Steuerbolzen 37, 37' geführt in dem gewählten U-Schenkel der Steuernut 36 zwangsläufig in den zugeordneten V-Schenkel 58, 59 der Steuerausnehmung 42 und taucht in dessen zwickelseitiges Ende ein. Dadurch wird der Doppelmitnehmer 38, 38' derart geschwenkt, daß der bisher aktive Mitnehmerarm 39, 40 außer Eingriff mit der Verzahnung (= Zähne 15, 15') des Sperrades 14, 14' gerät und der bisher inaktive Mitnehmerarm 39, 40 in Eingriff mit der Verzahnung (= Zähne 15, 15') gerät. Damit ist die Drehrichtungsumkehr des spannhebelseitigen Richtgesperres, nämlich des Spannrichtgesperres 80 im Prinzip vollzogen.

Neben der durch die Steuerschieber 31, 31' aufgespannten Ebene in einer dazu etwa parallelen Bewegungsebene ist der mit den Steuerschiebern 31, 31' bewegungsmäßig verbundene, über die Druckfeder 44 gegen das Querjoch 30 widergelagerte Stellungsschieber 45 angeordnet. Die Druckrichtung der Druckfeder 44 wirkt analog der Druckrichtung des Federpakets 34, 34' in Richtung auf die Sperräder 14, 14'. Wird der Spannhebel 17 jetzt um die Aufwickelwelle 11 in vom Rahmengehäuse 1 weggewandter Schwenkrichtung 46 weggeschwenkt, so kann ein maximaler Öffnungswinkel α von etwa 90° zwischen Schwenkarm 17 und Rahmengehäuse 1 erreicht werden, dessen Scheitel etwa in der Mittelachse der Aufwickelwelle 11 liegt und dessen Größe von den beiden Anschlägen 47 A und 47 B bestimmt wird. Am Ende dieser Schwenkbewegung schlägt der Stellungsschieber 45 derart an den am Rahmengehäuse 1 angeformten Schwenkanschlägen 47 A und 47 B an, daß der mit ihm verbundene Spannhebel 17 an einer weiteren Schwenkbewegung gehindert wird. Zum Spannen des Zurrgurtes 8 bis zur Erreichung seiner Sollspannung braucht nunmehr diese beschriebene Hin- und Herbewegung des Spannhebels 17 nur ausreichend oft wiederholt zu werden, ohne daß die Bedienungsperson besondere Aufmerksamkeit walten zu lassen hat. Die beim Anschlagen des Stellungsschiebers 45 an den Schwenkanschläge 47 A und 47 b vom Sperrad 14, 14' auf die Aufwickelwelle 11 übertragene Drehstellung, also die jeweils erreichte Zurrendstellung wird vom am Rahmengehäuse 1 angeordneten, eingangs beschriebenen Sicherungsrichtgesperre gesichert, also selbsttätig aufrechterhalten. Dazu ist vorher der Doppelsperrer 21, 21' durch die beschriebene Steuerung seitens seines Andruckschiebers 28 in die der gewählten Zurrichtung zugeordnete Sperrichtung überführt worden. Der dieser Sperrichtung zugeordnete Sperrarm 23 oder 24 greift sperrend in die Sperradverzahnung (= Zähne 15, 15') ein.

Um die erreichte und derart gesicherte Zurrendstellung der Aufwickelwelle 11 zu lösen, wird wie folgt vorgegangen: Durch Zugbewegung am Handgriff 32 in Richtung auf den Betätigungsgriff 20 wird der Stellungsschieber 45 aus seiner Anschlagstellung soweit zurückgezogen, daß er außerhalb seiner Berührung mit dem Schwenkanschlag 47 A gelangt. Dadurch ist der Schwenkarm 17 in Schwenkrichtung 46 weiter schwenkbar. Dabei gleitet der Stellungsschieber 45 mit seinem dem Sperrad 14, 14' zugewandten Ende zunächst auf dem kurvenartigen Umfang 61 der Seitenwand 5, 5' des Rahmengehäuses 1 bis er endlich an am Rahmengehäuse 1 angeformten Vorsprüngen 48 anschlägt und in der Rastnut 62 einrastet. Mit der bis dahin erfolgenden Schwenkung des Schwenkarms 17 überführt der Stellungsschieber 45 den Doppelmitnehmer 38, 38' in seine Neutralstellung (Fig. 8). Dabei überwindet der Stellungsschieber 45 den Druck der Druckfeder 44, die ihn gegen die Auslösekurve 61 drückt und in die an deren Ende eingeformte Rastnut 48 drängt. Durch die bewegungsmäßige Verbindung des Stellungsschiebers 45 mit dem Steuerschieber 31, 31' zu gemeinsamer Rückholung infolge der Zugbewegung am Handgriff 32 wird der Steuerbolzen 37, 37' aus dem U-Schenkel in den Querschenkel 55 der Steuernut 36 des Spannhebels 17 zurückgeführt. Dies bewirkt, daß die Mitnehmerarme 39, 40 des Doppelmitnehmers 38, 38' außer Eingriff mit der Verzahnung (= Zähne 15, 15') sind. In dieser Position nimmt der Doppelmitnehmer 38, 38' Mittelschwenkstellung gegenüber den Sperrädern 14, 14' ein.

Am von der Aufwickelwelle 11 durchsetzten Freiende des Spannhebels 17 ist eine dem Betätigungsgriff 20 abgewandte Nocke 49 angeformt. Wird der Spannhebel 17 in Drehrichtung 46 über den Schwenkanschlag 47 hinausgeschwenkt, gerät die Nocke 49 in eine auf die Sperrarme 23, 24 derart einwirkende Dreh- und Beaufschlagungsstellung, daß die Sperrarme 23, 24 aus der Verzahnung (= Zähne 15, 15') herausgeschwenkt werden. Nunmehr ist die Aufwickelwelle 11 zum Lösen des Zurrgurtes 8 frei drehbar. Das Sicherungsrichtgesperre ist voll inaktiviert.

An beiden Enden des vom Spannhebel 17 in Schwenkrichtung 46, 46' zurückgelegten Schwenkweges sind die Rastausnehmungen 51 sowie die Rastausnehmungen 62 am Rahmengehäuse 1 angeformt.

Durch Zugbewegung am Handgriff 32 gegen den Druck der Druckfeder 44 und des Federpakets 34, 34' ist der in dieser Richtung mit dem Steuerschieber 31, 31' bewegungsmäßig gekoppelte Stellungsschieber 45 derart zurückziehbar, daß er von der Druckfeder 44 beaufschlagt in die Rastausnehmungen 51 bzw. 62 des Rahmengehäuses 1 einrastet. Dadurch ist der Spannhebel 17 sowohl in seiner extremen Öfnnungsstellung als auch seiner extremen Schließstellung (= Ruheposition) arretiert.

Die Wirkungsweise der Ratsche soll zur besseren Übersichtlichkeit noch einmal anhand ihrer, für die wesentlichen Funktionsstellungen ursächlichen Elemente beschrieben werden:

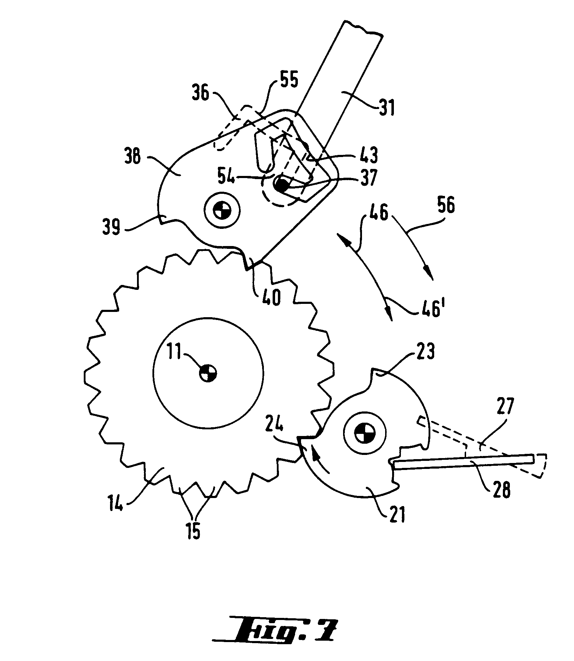

Fig. 5 zeigt die Verwendung als Druckratsche, wobei das Drehmoment durch eine Drehbewegung in Schwenkrichtung 46 weg vom Rahmengehäuse 1 erzeugt wird. Das Spannen erfolgt also gegen den Uhrzeigersinn in Spannrichtung 50. Hierbei sind der obere Mitnehmerarm 39 des Doppelmitnehmers 38, 38' des Spannrichtgesperres und der obere Sperrarm 23 des Doppelsperrers 21, 21' des Sperrichtgesperres mit der Verzahnung (= Zähne 15, 15') in Eingriff. Die Drehung des Sperrades 14, 14' erfolgt durch den Antrieb des Mitnehmers 38 seitens des hier nicht dargestellten Spannhebels 17 in Spannrichtung 50 infolge des in dieser Richtung sperrenden Eingriffes des oberen Mitnehmerarmes 39 in der Verzahnung (= Zähne 15, 15'). Beim Leerhub gegen die Spannrichtung 50, also im Uhrzeigersinn 46' gleitet der obere Mitnehmerarm 39 ungehindert über die Zähne 15, 15'.

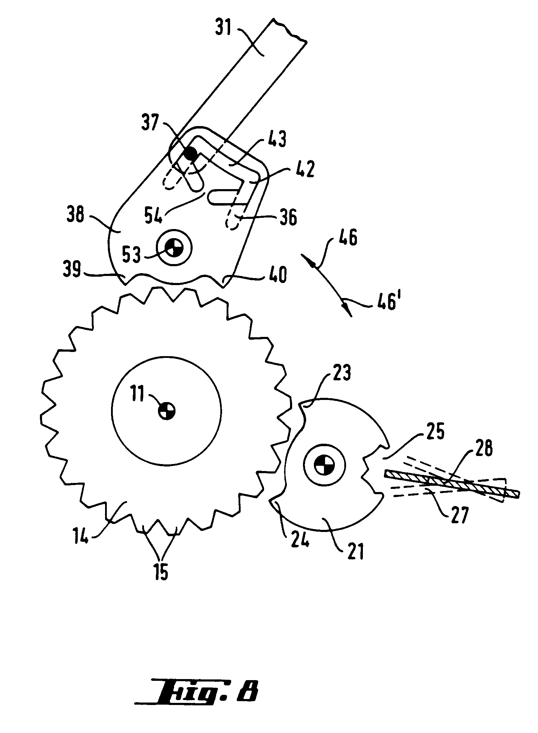

Fig. 6 und 7 zeigen die Verwendung als Zugratsche mit einer Schwenkbewegung 46' des Spannhebels 17 hin zum Rahmengehäuse 1. Die Spannrichtung 56 verläuft im Uhrzeigersinn 46', wobei der untere Mitnehmerarm 40 des vom nicht dargestellten Spannhebel 17 getriebenen Doppelmitnehmers 38, 38' und der untere Sperrarm 24 des am Rahmengehäuse 1 drehgelagerten Doppelsperrers 21, 21' mit den Sperrädern 14, 14' bzw. mit deren Sperradzähnen 15, 15' in Eingriff sind. Dieser Eingriff 24/14 sperrt die Sperräder 14, 14' gegen eine Rückdrehung entgegen dem Uhrzeigersinn, bzw. entgegen der Spannrichtung 56. (Fig. 7) Bei der Drehbewegung in Spannrichtung 56 hin zum Rahmengehäuse 1 ist der untere Mitnehmerarm 40 fest im Eingriff mit einem Zahn 15, 15'. Beim Leerhub in Schwenkrichtung 46 entgegen der Spannrichtung 56 gleitet der untere Mitnehmerarm 40 ungehindert über die Zähne 15, 15'.

Fig. 8 zeigt schematisch die Freilaufstellung der Ratsche. Weder der untere Sperrarm 24 noch der obere Sperrarm 23 noch der untere Mitnehmerarm 40 noch der obere Mitnehmerarm 39 sind mit den Sperrädern bzw. den Sperradzähnen (15, 15') im Eingriff. Die Sperrarme 23, 24 des Doppelsperrers 21, 21' sind von der Nocke 49 des Spannhebels 17 außer Eingriff gehalten. Die Mitnehmerarme 39, 40 des Doppelmitnehmers 38, 38' sind durch stirnseitiges Anliegen des Stellungsschiebers 45 auf der Auslösekurve 61 oder durch Einrasten in die Rastnut 62 des Rahmengehäuses 1 außer Eingriff mit dem Sperrad 14, 14' gehalten. Der Handgriff 32 wird hierzu in Richtung auf den Betätigungsgriff 20 gezogen. Durch die beschriebene, bewegungsmäßige Koppelung des Stellungsschiebers 45 mit dem Steuerschieber 31, 31' wird die Freilaufstellung der Mitnehmerarme 39, 40 des Doppelmitnehmers 38, 38' erricht.

Es sei noch einmal zusammengefasst:
Das in den Ansprüchen erwähnte Sicherungsrichtgesperre 70 ist durch das Sperrad 14, 14' in Verbindung mit dem Doppelsperrer 21, 21' gebildet und das in den Ansprüchen erwähnte Spannrichtgesperre 80 ist durch das Sperrad 14, 14' und den Doppelmitnehmer 38, 38' gebildet.

### Bezugszeichen

- 1: Rahmengehäuse
- 2: Längsrichtung
- 3: Rückfreiende
- 4: Befestigungsbolzen
- 5, 5': Seitenwand
- 6: Querrichtung
- 7: Festende
- 8: Zurrgurt
- 9: Vorderfreiende
- 10: Querverbindungsblech
- 11: Aufwickelwelle
- 12: Gurtaufnahmeschlitz
- 13: Lagerstift
- 14, 14': Sperrad
- 15, 15': Sperradzahn
- 16: Radialrichtung
- 17: Spannhebel
- 18, 18': Spannhebelseitenwand
- 19: Griffende
- 20: Betätigungsgriff
- 21, 21': Doppelsperrer
- 22: Sperrachse
- 23: Oberer Sperrarm
- 24: Unterer Sperrarm
- 25: Rückseite
- 26: Schaltausnehmung
- 27: Schieberführungsnut
- 28: Andruckschieber
- 29: Federelement
- 30: Querjoch
- 31, 31': Steuerschieber
- 32: Handgriff
- 33, 33': Fixiervorsprung
- 34, 34': Federpaket
- 35, 35': Verjüngungsstelle
- 36: Steuernut
- 37, 37': Steuerbolzen
- 38, 38': Doppelmitnehmer
- 39: Oberer Mitnehmerarm
- 40: Unterer Mitnehmerarm
- 41: Mitnehmerrückseite
- 42: Steuerausnehmung
- 43: Verbindungsnut
- 44: Druckfeder
- 45: Stellungsschieber
- 46, 46': Schwenkrichtung
- 47 A: Schwenkanschlag
- 47 B: Schwenkanschlag
- 48: Vorsprung
- 49: Nocke
- 50: Spannrichtung
- 51: Rastausnehmung
- 52: Öffnung
- 53: Achse
- 54: Zwickel
- 55: Querschenkel
- 56: Spannrichtung
- 57: U-Schenkel
- 58: V-Schenkelende
- 59: V-Schenkelende
- 60: Querverbindungsblech
- 61: Auslösekurve
- 62: Rastnut
- 63: Lasche
- 70: Sicherungsrichtgesperre
- 80: Spannrichtgesperre
- α: Öffnungswinkel

## Patentansprüche

1. Spannratsche für einen Zurrgurt (8)
- mit einem das Festende (7) des Zurrgurtes (8) zwischen seinen Seitenwänden (5,5') fixierenden Rahmengehäuse (1),
- mit einer
-- am Rahmengehäuse (1) drehbar gelagerten und
-- den Zwischenraum zwischen seinen Seitenwänden (5,5') überbrückenden
Welle (11) zum Aufwickeln des Zurrgurtes (8) von der Seite seines Losendes her,
- mit einem von der Welle (11) getragenen Spannhebel (17),
- mit einem zwischen Rahmengehäuse (1) und Welle (11) wirksamen Sicherungsrichtgesperre (70) zur Sicherung der aufgrund einer Spannhebelbetätigung erreichten Drehstellung gegen Rückdrehung und
- mit einem zwischen Spannhebel (17) und Welle (11) wirksamen Spannrichtgesperre (80) zur drehfesten Fixierbarkeit des Spannhebels (17) als Drehantrieb der Welle (11),
gekennzeichnet durch
a) eine Umschaltbarkeit der Sperrichtung des Sicherungsrichtgesperres (70) und
b) eine Umschaltbarkeit der Sperrichtung des Spannrichtgesperres (80)

2. Ratsche nach Anspruch 1,
dadurch gekennzeichnet,
daß das Sicherungsrichtgesperre (70) von Hand umschaltbar ist.

3. Ratsche nach Anspruch 1 oder Anspruch 2,
gekennzeichnet durch
je einen
- gegen die jeweilige Aufwickelrichtung auf die Aufwickelwelle (11) sperrend einwirkenden und
- zwischen einer Sperrstellung und einer Übergleitstellung bewegbaren, Sperrer am Rahmengehäuse (1).

4. Ratsche nach Anspruch 3,
dadurch gekennzeichnet,
daß das Sicherungsrichtgesperre (70) ein Zahngesperre ist,
- dessen außenverzahntes Sperrad (14,14') mit der zu ihm im wesentlichen koaxialen Aufwickelwelle (11) fest verbunden ist und
- dessen Sperrer ein am Rahmengehäuse (1) jeweils schwenkbar gelagerter, einarmiger Hebel ist

5. Ratsche nach Anspruch 3 oder 4,
dadurch gekennzeichnet,
daß die den beiden Sperrichtungen zugeordneten Sperrer die Sperrarme (23, 24) eines zweiarmigen, zwischen beiden Sperrstellungen schwenkbaren Doppelsperrers (21,21') sind.

6. Ratsche nach Anspruch 5,
gekennzeichnet durch
ein am Rahmengehäuse (1) gelagertes und wahlweise einen der Sperrarme (23, 24) des Doppelsperrers (21,21') in seine Sperrstellung schwenkendes und in dieser haltendes Schaltelement.

7. Ratsche nach Anspruch 6,
dadurch gekennzeichnet,
daß das Schaltelement ein federbelasteter Andruckschieber (28) ist.

8. Ratsche nach einem oder mehreren der vorhergehenden Ansprüche,
gekennzeichnet durch
eine im wesentlichen X-förmige Schieberführungsnut (27) im Rahmengehäuse (1), wobei der Andruckschieber (28) wahlweise in einem der beiden V-Schenkel zur Beaufschlagung des zugeordneten Sperrarmes (23, 24) geführt ist.

9. Ratsche nach Anspruch 5,
dadurch gekennzeichnet,
daß beide Sperrarme (23, 24) des Doppelsperrers (21,21') symmetrisch zu einer dessen Schwenkachse enthaltenden Ebene angeordnet sind.

10. Ratsche nach Anspruch 5 oder 9,
gekennzeichnet durch
eine symmetrische Zahnform der Sperradzähne (15,15') und eine Formgebung und Ausrichtung der Sperrarmenden des Doppelsperrers (21,21') derart, daß ihre Außenflanken gegen die Sperradzähne (15,15') sperren und ihre Innenflanken über die Sperradzähne (15,15') gleiten.

11. Ratsche nach einem der Ansprüche 5 bis 10,
gekennzeichnet durch
eine an der dem Sperrad (14,14') abgewandten Rückseite des Doppelsperrers (21,21') angeordnete, im wesentlichen V-förmige Schaltausnehmung (26), von deren beiden Flanken eine je nach Sperrichtung vom Schaltelement (= Andruckschieber 28) beaufschlagt ist.

12. Ratsche nach einem oder mehreren der vorhergehenden Ansprüche,
dadurch gekennzeichnet,
daß das Spannrichtgesperre (80) von Hand umschaltbar ist.

13. Ratsche nach Anspruch 12
gekennzeichnet durch
je einen
- in Mitnahmerichtung auf die Welle (11) mitnehmend einwirkenden und
- zwischen einer Mitnahmestellung und einer Übergleitstellung bewegbaren
Mitnehmer am Spannhebel (17).

14. Ratsche nach Anspruch 12 oder 13
dadurch gekennzeichnet,
daß das Spannrichtgesperre (80) ein Zahngesperre ist,
- dessen mit dem Sperrad (14,14') zusammenwirkender Mitnehmer ein am Spannhebel (17) jeweils schwenkbar gelagerter, einarmiger Hebel ist

15. Ratsche nach einem der Ansprüche 12 bis 14
dadurch gekennzeichnet,
daß die den beiden Mitnahmerichtungen zugeordneten Mitnehmer die Arme (39,40) eines zweiarmigen, zwischen beiden Richtungsstellungen schwenkbaren Doppelmitnehmers (38,38') sind.

16. Ratsche nach nach einem der Ansprüche 12 bis 15
gekennzeichnet durch
ein am Spannhebel (17) gelagertes und wahlweise einen der Mitnehmerarme (39,40) des Doppelmitnehmers (38,38') in seine Mitnehmerstellung schwenkendes und in dieser haltendes Schaltelement.

17. Ratsche nach Anspruch 16
dadurch gekennzeichnet,
daß das Schaltelement in Richtung auf das Sperrad (14,14') federbelasteter Steuerschieber (31,31') ist.

18. Ratsche nach einem oder mehreren der vorhergehenden Ansprüche,
gekennzeichnet durch
eine im wesentlichen U-förmige Steuernut (36) im Spannhebel (17), wobei der Steuerschieber (31,31') wahlweise in einem der beiden U-Schenkel (57) zur Beaufschlagung des zugeordneten Mitnehmerarmes (39,40) geführt ist.

19. Ratsche nach einem oder mehreren der vorhergehenden Ansprüche,
dadurch gekennzeichnet,
daß beide Mitnehmerarme (39,40) des Doppelmitnehmers (38,38') symmetrisch zu einer dessen Schwenkachse enthaltenden Ebene angeordnet sind.

20. Ratsche nach einem oder mehreren der vorhergehenden Ansprüche,
gekennzeichnet durch
eine Formgebung und Ausrichtung der Mitnehmerarmenden des Doppelmitnehmers (38,38') derart, daß ihre Außenflanken den anliegenden Sperradzahn (15,15') mitnehmen und ihre Innenflanken über die Sperradzähne (15,15') gleiten.

21. Ratsche nach einem oder mehreren der vorhergehenden Ansprüche
gekennzeichnet durch
eine an der dem Sperrad (14,14') abgewandten Rückseite des Doppelmitnehmers (38,38') angeordnete, im wesentlichen V-förmige Steuerausnehmung (42), von deren beiden Schenkel (58, 59) eine je nach Mitnahmerichtung vom Steuerschieber (31,31') beaufschlagt ist.

22. Ratsche nach Anspruch 21
gekennzeichnet durch
eine Verbindungsnut (43) zwischen den auseinanderliegenden V-Schenkelenden (58, 59) der Steuerausnehmung (42).

23. Ratsche nach einem oder mehreren der vorhergehenden Ansprüche
gekennzeichnet durch
einen Handgriff (32) am sperradabseitigen Ende des Steuerschiebers (31,31') zur Entsperrung des Spannrichtgesperres.

24. Ratsche nach einem oder mehreren der vorhergehenden Ansprüche,
gekennzeichnet durch
eine Schwenklagerung des sperradabseitigen Endes des Steuerschiebers (31,31') am Spannhebel (17) um eine zur Welle (11) parallele Achse.

25. Ratsche nach einem oder mehreren der vorhergehenden Ansprüche mit einem den Spannhub des Spannhebels (17) begrenzenden Schwenkanschlag (47) am Rahmengehäuse (1)gegen den ein am Spannhebel (17) in Richtung gegen die Welle (11) federbeaufschlagter Stellungsschieber (45) anschlägt,
dadurch gekennzeichnet,
daß der Stellungsschieber (45) mit dem Steuerschieber (31,31') antriebsmäßig verbunden ist derart, daß er durch die Entsperrung des Steuerschiebers (31,31') aus seiner Anschlagsstellung zurückgezogen wird.

26. Ratsche nach einem oder mehreren der vorhergehenden Ansprüche
gekennzeichnet durch
an den beiden Enden des Schwenkweges des Spannhebels (17) am Rahmengehäuse (1) angeordnete Rastausnehmungen (51, 62) zum federbelasteten Eingriff des Stellungsschiebers (45).

27. Ratsche nach einem oder mehreren der vorhergehenden Ansprüche
gekennzeichnet durch
eine an das Lagerende des Spannhebels (17) angeformte Nocke (49) derart, daß in gegenüber dem Rahmengehäuse (1) auseinandergeklappter Schwenkendstellung des Spannhebels (17) die Nocke (49) beide Sperrarmenden des Doppelsperrers (21,21') aus ihrem Sperradeingriff ausklinkt.

28. Ratsche nach einem oder mehreren der vorhergehenden Ansprüche,
gekennzeichnet durch
eine getriebemäßige Verbindung zwischen dem Spannrichtgesperre (80) und dem Sicherungsrichtgesperre (70) derart, daß ihre Spann- bzw. Sperrichtung jeweils miteinander übereinstimmen.

29. Ratsche nach einem oder mehreren der vorhergehenden Ansprüche,
gekennzeichnet durch
im Bereich der beiden Seitenwände (5,5') des Rahmengehäuses (1) jeweils ein Spannrichtgesperre (80) und ein Sicherungsrichtgesperre (70).

30. Ratsche nach einem oder mehreren der vorhergehenden Ansprüche
gekennzeichnet durch
eine zur in der Rotationsebene der Welle (11) liegenden Mittelebene symmetrische Anordnung der doppelt vorhandenen Richtgesperre (80) (70).

## Claims

1. A tensioning ratchet for a lashing strap (8)
- with a frame housing (1) fixing the fixed end (7) of the lashing strap (8) between its side walls (5, 5'),
- with a spindle (11) for winding up the lashing strap (8) from the side of its loose end,
-- which is rotatably mounted on the frame housing (1) and
-- bridges the gap between its side walls (5, 5'),
- with a tensioning lever (17) supported by the spindle (11),
- with a directional ratchet-securing mechanism (70) operative between the frame housing (1) and the spindle (11) for securing the rotational position reached by the actuation of the tensioning lever, against reverse rotation and
- with a directional tension locking mechanism (80) operative between the tensioning lever (17) and the spindle (11) for allowing the tensioning lever (17) to be secured against rotation as the rotary drive for the spindle (11),
characterized by
a) the locking direction of the directional ratchet-securing mechanism (70) being switchable and
b) the locking direction of the directional tension locking mechanism (80) being switchable.

2. A ratchet according to claim 1,
characterized in that
the directional ratchet-securing mechanism (70) is switchable by hand.

3. A ratchet according to claim 1 or claim 2,
characterized by
one locking means each on the frame housing (1)
- acting with a locking effect against the respective winding up direction onto the spindle (11) and
- being movable between a locking position and a slide-over position.

4. A ratchet according to claim 3,
characterized in that
the directional ratchet-securing mechanism (70) is a toothed ratchet mechanism,
- whose externally toothed ratchet wheel (14, 14') is rigidly connected to the spindle (11) which is substantially coaxial therewith and
- whose locking means is a one-armed lever always pivotably mounted on the frame housing (1).

5. A ratchet according to claim 3 or 4,
characterized in that
the locking means assigned to the two locking directions are the pawl arms (23, 24) of a two-armed double pawl (21, 21') pivotable between both locking positions.

6. A ratchet according to claim 5,
characterized by
a switching element mounted on the frame housing (1) and selectively pivoting one of the pawl arms (23, 24) of the double pawl (21, 21') into its locking position and holding it therein.

7. A ratchet according to claim 8,
characterized in that
the switching element is a spring-loaded press-on slide (28).

8. A ratchet according to one or more of the preceding claims,
characterized by
a substantially X-shaped slide guiding groove (27) in the frame housing (1), the press-on slide (28) being selectively carried in one of the two V arms for acting on the associated pawl arm (23, 24).

9. A ratchet according to claim 5,
characterized in that
the two pawl arms (23, 24) of the double pawl (21, 21') are symmetrically arranged to a plane containing its axis of pivoting.

10. A ratchet according to claim 5 or 9,
characterized by
a symmetrical tooth shape of the ratchet wheel teeth (15, 15') and a design and orientation of the ends of the pawl arms of the double pawl (21, 21') in such a way that their outer flanks lock against the ratchet wheel teeth (15, 15') and their inner flanks slide over the ratchet wheel teeth (15, 15').

11. A ratchet according to one of claims 5 to 10,
characterized by
a substantially V-shaped switching recess (26) arranged on the rear side of the double pawl (21, 21') remote from the ratchet wheel (14, 14'), one of the two flanks of which recess being acted on by the switching element (=press-on slide 28).

12. A ratchet according to one or more of the preceding claims,
characterized in that
the directional tension locking mechanism (80) is switchable by hand.

13. A ratchet according to claim 12,
characterized by
one driver each on the tensioning lever (17)
- acting on the spindle (11) with a driving effect in the driving direction and
- being movable between a driving position and a slide-over position.

14. A ratchet according to claim 12 or 13,
characterized in that
the directional tension locking mechanism (80) is a toothed ratchet mechanism,
- whose driver cooperating with the ratchet wheel (14, 14') is a one-armed lever always pivotably mounted on the tensioning lever (17).

15. A ratchet according to one of claims 12 to 14,
characterized in that
the drivers assigned to the two driving directions are the arms (39, 40) of a two-armed double driver (38, 38') pivotable between both direction settings.

16. A ratchet according to one of claims 12 to 15,
characterized by
a switching element mounted on the tensioning lever (17) and selectively pivoting one of the driver arms (39, 40) of the double driver (38, 38') into its driving position and holding it therein.

17. A ratchet according to claim 16,
characterized in that
the switching element is a control slide (31, 31') spring-loaded in the direction towards the ratchet wheel (14, 14').

18. A ratchet according to one or more of the preceding claims,
characterized by
a substantially U-shaped control groove (36) in the tensioning lever (17), with the control slide (31, 31') being selectively carried in one of the two U arms (57) for acting on the assigned driver arm (39, 40).

19. A ratchet according to one or more of the preceding claims,
characterized in that
both driver arms (39, 40) of the double catch (38, 38') are arranged symmetrically to a plane containing its axis of pivoting.

20. A ratchet according to one or more of the preceding claims,
characterized by
a design and orientation of the ends of the catch arms of the double catch (38, 38') in such a way that its outer flanks entrain the applied ratchet wheel tooth (15, 15') and their inner flanks slide over the ratchet wheel teeth (15, 15').

21. A ratchet according to one or more of the preceding claims,
characterized by
a substantially V-shaped control recess (42) arranged on the rear side of the double pawl (38, 38') remote from the ratchet wheel (14, 14'), one of the two arms (58, 59) of which recess being acted on by the control slide (31, 31') depending on the driving direction.

22. A ratchet according to claim 21,
characterized by
a connecting groove (43) between the divergent ends (58, 59) of the V arms of the control recess (42).

23. A ratchet according to one or more of the preceding claims,
characterized by
a handle (32) at the end of the control slide (31, 31') remote from the ratchet wheel for releasing the directional tension locking mechanism.

24. A ratchet according to one or more of the preceding claims,
characterized by
a pivotable mounting of the end of the control slide (31, 31') remote from the ratchet wheel on the tensioning lever (17) round an axis parallel to the spindle (11).

25. A ratchet according to one or more of the preceding claims, with a pivoting stop (47) on the frame housing (1) limiting the tensioning stroke of the tensioning lever (17), against which stop there bears a setting slide (45) spring-loaded on the tensioning lever (17) in the direction against the spindle (11),
characterized in that
the setting slide (45) is connected drive-wise to the control slide (31, 31') in such a way that it is retracted from its bearing position by the release of the control slide (31, 31').

26. A ratchet according to one or more of the preceding claims,
characterized by
engagement recesses (51, 62) arranged on the frame housing (1) at both ends of the pivoting path of the tensioning lever (17) for the spring-loaded engagement of the setting slide (45).

27. A ratchet according to one or more of the preceding claims,
characterized by
a cam (49) formed on the bearing end of the tensioning lever (17) in such a way that in the final moved-out pivoted position of the tensioning lever (17) relative to the frame housing (1), the cam (49) releases both ends of the pawl arms of the double pawl (21, 21') from their engagement with the ratchet wheel.

28. A ratchet according to one or more of the preceding claims,
characterized by
a linkage between the directional tension locking mechanism (80) and the directional ratchet securing mechanism (70) in such a way that their tensioning and locking direction coincide with each other in each case.

29. A ratchet according to one or more of the preceding claims,
characterized by
respectively one directional tension locking mechanism (80) and one directional ratchet securing mechanism (70) in the zone of the two side walls of the frame housing (1).

30. A ratchet according to one or more of the preceding claims,
characterized by
an arrangement of the dual locking system (80) (70) provided, which is symmetrical to a median plane lying in the plane of rotation of the spindle (11).

## Revendications

1. Tendeur à cliquet pour une sangle d'amarrage (8), comportant
- un carter-châssis (1) fixant l'extrémité fixe (7) de la sangle d'amarrage (8) entre ses parois latérales (5, 5'),
- un arbre (11) monté tournant dans le carter-châssis (1), traversant l'espace intermédiaire entre ses parois latérales (5, 5'), et destiné à enrouler la sangle d'amarrage (8) à partir du côté de son extrémité libre,
- un levier de serrage (17) porté par l'arbre (11),
- un ensemble à cliquet de sens de blocage (70) agissant entre le carter-châssis (1) et l'arbre (11), pour réaliser le blocage de la position de rotation atteinte en raison d'un actionnement du levier de serrage, à l'encontre d'un mouvement de rotation de retour, et
- un ensemble à cliquet de sens de serrage (80) agissant entre le levier de serrage (17) et l'arbre (11), pour réaliser la liaison de rotation du levier de serrage (17) en tant que dispositif d'entraînement en rotation de l'arbre (11),
caractérisé
a) par une possibilité d'inversion du sens de blocage de l'ensemble à cliquet de sens de blocage (70), et
b) par une possibilité d'inversion du sens de blocage de l'ensemble à cliquet de sens de serrage (80).

2. Dispositif à cliquet selon la revendication 1, caractérisé en ce que l'ensemble à cliquet de sens blocage (70) peut être inversé manuellement.

3. Dispositif à cliquet selon la revendication 2 ou 3, caractérisé par un cliquet de blocage sur le carter-châssis (1) pour chaque sens d'enroulement, agissant sur l'arbre d'enroulement (11) en le bloquant, chacun pour un sens d'enroulement, et pouvant être déplacés chacun entre une position de blocage et une position de passage libre.

4. Dispositif à cliquet selon la revendication 3, caractérisé en ce que l'ensemble à cliquet de sens de blocage (70) est un ensemble à cliquet à denture,
- dont la roue à rochet (14, 14') à denture extérieure est reliée de manière fixe à l'arbre d'enroulement (11) qui lui est sensiblement coaxial, et
- dont chaque cliquet de blocage est un levier à bras unique monté pivotant sur le carter-châssis (1).

5. Dispositif à cliquet selon la revendication 3 ou 4, caractérisé en ce que les cliquets de blocage associés aux deux sens de blocage sont constitués par les bras de blocage (23, 24) d'un cliquet de blocage double (21, 21') à double bras, pouvant être pivoté entre les deux positions de blocage.

6. Dispositif à cliquet selon la revendication 5, caractérisé par un élément de commande monté sur le carter-châssis (1) et faisant pivoter, au choix, l'un des bras de blocage (23, 24) du cliquet de blocage double (21, 21') dans sa position de blocage et le maintenant dans celle-ci.

7. Dispositif à cliquet selon la revendication 6, caractérisé en ce que l'élément de commande est un coulisseau-poussoir (28) sollicité par ressort.

8. Dispositif à cliquet selon l'une ou plusieurs des revendications précédentes, caractérisé par une rainure de guidage de coulisseau (27) sensiblement en forme de "V dans le carter-châssis (1), le coulisseau-poussoir (28) étant guidé au choix dans l'une des deux branches du "V" en vue de solliciter le bras de blocage (23, 24) associé.

9. Dispositif à cliquet selon la revendication 5, caractérisé en ce que les deux bras de blocage (23, 24) du cliquet de blocage double (21, 21') sont disposés symétriquement par rapport à un plan renfermant son axe de pivotement.

10. Dispositif à cliquet selon la revendication 5 ou 9, caractérisé par une forme de dent symétrique des dents de roue à rochet (15, 15'), et une configuration de forme et une orientation telles, des extrémités de bras de blocage du cliquet de blocage double (21, 21'), que ses flancs extérieurs réalisent un blocage contre les dents de roue à rochet (15, 15'), et que ses flancs intérieurs glissent par-dessus les dents de roue à rochet (15, 15').

11. Dispositif à cliquet selon l'une des revendications 5 à 10, caractérisé par un évidement de commande (26) essentiellement en forme de "V", disposé sur le côté arrière du cliquet de blocage double (21, 21') éloigné de la roue à rochet (14, 14'), et dont l'un des deux flancs respectifs est sollicité par l'élément de commande (= coulisseau-poussoir 28) en fonction du sens de blocage respectivement correspondant.

12. Dispositif à cliquet selon l'une ou plusieurs des revendications précédentes, caractérisé en ce que l'ensemble à cliquet de sens de serrage (80) peut être inversé manuellement.

13. Dispositif à cliquet selon la revendication 12, caractérisé par un cliquet d'entraînement sur le levier de serrage (17), pour chaque sens d'entraînement, agissant sur l'arbre (11) en l'entraînant, et pouvant être déplacés chacun entre une position d'entraînement et une position de passage libre.

14. Dispositif selon la revendication 12 ou 13, caractérisé en ce que l'ensemble à cliquet de sens de serrage (80) est un ensemble à cliquet à denture,
- dont chaque cliquet d'entraînement coopérant avec la roue à rochet (14, 14'), est un levier à bras unique monté pivotant sur le levier de serrage (17).

15. Dispositif selon l'une des revendications 12 à 14, caractérisé en ce que les cliquets d'entraînement associés aux deux sens d'entraînement, sont constitués par les bras (39, 40) d'un cliquet d'entraînement double (38, 38') à double bras, pouvant être pivoté entre les deux positions de sens d'entraînement.

16. Dispositif à cliquet selon l'une des revendications 12 à 15, caractérisé par un élément de commande monté sur le levier de serrage (17) et faisant pivoter, au choix, l'un des bras d'entraînement (39, 40) du cliquet d'entraînement double (38, 38') dans sa position d'entraînement et le maintenant dans celle-ci.

17. Dispositif à cliquet selon la revendication 16, caractérisé en ce que l'élément de commande est un coulisseau de commande (31, 31') sollicité par ressort en direction de la roue à rochet (14, 14').

18. Dispositif à cliquet selon l'une ou plusieurs des revendications précédentes, caractérisé par une rainure de commande (36) essentiellement en forme de "U" dans le levier de serrage (17), le coulisseau de commande (31, 31') étant guidé, au choix, dans l'une des deux ailes (57) du "U", pour solliciter le bras d'entraînement (39, 40) associé.

19. Dispositif à cliquet selon l'une ou plusieurs des revendications précédentes, caractérisé en ce que les deux bras d'entraînement (39, 40) du cliquet d'entraînement double (38, 38'), sont disposés symétriquement par rapport à un plan renfermant son axe de pivotement.

20. Dispositif à cliquet selon l'une ou plusieurs des revendications précédentes, caractérisé par une configuration de forme et une orientation telles, des extrémités de bras d'entraînement du cliquet d'entraînement double (38, 38'), que ses flancs extérieurs entraînent la dent de roue à rochet (15, 15') sur laquelle il prend appui, et que ses flancs intérieurs glissent par-dessus les dents de roue à rochet (15, 15').

21. Dispositif à cliquet selon l'une ou plusieurs des revendications précédentes, caractérisé par un évidement de commande (42) essentiellement en forme de "V", disposé sur le côté arrière du cliquet d'entraînement double (38, 38') éloigné de la roue à rochet (14, 14'), et dont l'une des deux branches respectives (58, 59) est sollicitée par le coulisseau de commande (31, 31') en fonction du sens d'entraînement respectivement correspondant.

22. Dispositif à cliquet selon la revendication 21, caractérisé par une rainure de liaison (43) entre les extrémités des branches (58, 59) du "V", éloignées l'une de l'autre, de l'évidement de commande (42).

23. Dispositif à cliquet selon l'une ou plusieurs des revendications précédentes, caractérisé par une poignée (32) à l'extrémité éloignée de la roue à rochet, du coulisseau de commande (31, 31'), destinée à déverrouiller l'ensemble à cliquet de sens de serrage.

24. Dispositif à cliquet selon l'une ou plusieurs des revendications précédentes, caractérisé par un montage pivotant de l'extrémité éloignée de la roue à rochet, du coulisseau de commande (31, 31'), sur le levier de serrage (17), autour d'un axe parallèle à l'arbre (11).

25. Dispositif à cliquet selon l'une ou plusieurs des revendications précédentes, comportant, sur le carter-châssis (1), une butée de pivotement (47) limitant la course de serrage du levier de serrage (17) et contre laquelle vient buter un coulisseau de positon (45) sollicité par ressort en direction de l'arbre (11), caractérisé en ce que le coulisseau de position (45) est relié, quant à l'entraînement, au coulisseau de commande (31, 31'), de manière à ce que par le déverrouillage du coulisseau de commande (31, 31'), il est retiré de sa position de butée.

26. Dispositif à cliquet selon l'une ou plusieurs des revendications précédentes, caractérisé par des évidements d'encliquetage (51, 62) agencés sur le carter-châssis (1), aux deux extrémités de la course de pivotement du levier de serrage (17), et dans lesquels peut s'engager le coulisseau de position (45) en étant sollicité par ressort.

27. Dispositif à cliquet selon l'une ou plusieurs des revendications précédentes, caractérisé par une came (49) formée sur l'extrémité, côté palier, du levier de serrage (17), de manière à ce que dans la position extrême de pivotement du levier de serrage (17) dans laquelle il est écarté du carter-châssis (1), la came (49) dégage les deux extrémités de bras de blocage du cliquet de blocage double (21, 21') de leur prise avec la roue à rochet.

28. Dispositif à cliquet selon l'une ou plusieurs des revendications précédentes, caractérisé par une liaison du genre transmission entre l'ensemble à cliquet de sens de serrage (80) et l'ensemble à cliquet de sens de blocage (70), de manière à ce que leur sens respectifs de serrage et de blocage concordent entre-eux.

29. Dispositif à cliquet selon l'une ou plusieurs des revendications précédentes, caractérisé par un ensemble à cliquet de sens de serrage (80) et un ensemble à cliquet de sens de blocage (70) dans la zone de chacune des deux parois latérales (5, 5') du carter-châssis (1).

30. Dispositif à cliquet selon l'une ou plusieurs des revendications précédentes, caractérisé par une disposition des ensembles à cliquet de sens (80) (70) disponibles en double, symétrique par rapport au plan médian situé dans le plan de révolution de l'arbre (11).
